# EUROPEAN PATENT SPECIFICATION

(11) **EP 4 177 637 B1**
(45) Date of publication and mention of the grant of the patent: **15.04.2026**
(21) Application number: 21465559.9
(22) Date of filing: 05.11.2021
(51) Int. Cl.: G01S 13/931, G01S 13/42, G01S 13/86

(54) **METHOD FOR CLASSIFYING TARGET OBJECTS, CLASSIFICATION DEVICE, AND DRIVER ASSISTANCE SYSTEM**
VERFAHREN ZUR KLASSIFIZIERUNG VON ZIELOBJEKTEN, KLASSIFIZIERUNGSVORRICHTUNG UND FAHRERASSISTENZSYSTEM
PROCÉDÉ DE CLASSIFICATION D'OBJETS CIBLES, DISPOSITIF DE CLASSIFICATION ET SYSTÈME D'ASSISTANCE AU CONDUCTEUR

(43) Date of publication of application: 10.05.2023
(73) Proprietor: AUMOVIO Autonomous Mobility Germany GmbH, 85057 Ingolstadt (DE)
(72) Inventor: Buhoiu, Alina-Maria, 90411 Nürnberg (DE)
(74) Representative: Aumovio Corporation

(56) References cited:
- EP-A1- 2 026 099
- US-A1- 2017 309 181
- US-B2- 8 412 416
- KOPP JOHANNES ET AL: "Fast Rule-Based Clutter Detection in Automotive Radar Data", 2021 IEEE INTERNATIONAL INTELLIGENT TRANSPORTATION SYSTEMS CONFERENCE (ITSC), IEEE, 19 September 2021 (2021-09-19), pages 3010 - 3017, XP033993870, DOI: 10.1109/ITSC48978.2021.9564776

## Description

The invention relates to a method for classifying target objects, a corresponding classification device, and a driver assistance system comprising a classification device.

Using radar systems to detect the environment is very important for vehicles that are implementing functionalities based on the sensor detection and environment interpretation. There are a lot of functions developed on such systems, some of them have the purpose to assist the driver, but some of them can also take some actions, such as braking or steering. For all of these functionalities, the most valuable input is given by an environment model that can interpret the surrounding as realistic as possible.

Radar devices emit radar signals which are reflected from objects in a surrounding of the vehicle. Objects can be detected and positions, distances and relative velocities of the object can be determined based on the radar data. However, for driver assistance functionalities, not all objects are relevant. False positives can be generated, e.g., corresponding to objects located behind guardrails.

For example, a driver assistance system may provide a parking assistance functionality, thereby helping the driver to exit a parking spot in a backwards direction. Cross traffic can be detected based on the radar data. However, if a target object is driving behind the guardrail, this target object is not relevant for the maneuver of the vehicle because it cannot interact with the vehicle.

Determining an approximate shape of the guardrail, e.g., by using a 3rd degree function, can be complex and time-consuming.

US 2017/309181 A1 comprises an apparatus for recognizing a following vehicle including a rear radar for detecting an object located in the rear of a subject vehicle, a guardrail area detector for detecting a guardrail area of a road using a road image of front of the subject vehicle and an image of a stationary object among objects detected by the rear radar, and a following vehicle recognizing unit for recognizing, as a following vehicle, a vehicle located on a road in the same traveling direction as that of the subject vehicle among objects detected by the rear radar, wherein the following vehicle is not included in the guardrail area detected by the guardrail area detector. The apparatus is particularly provided for Lane Change, Lane Keep or Blind Spot detection Devices.

US 8 412 416 B2 describes a collision warning device for motor vehicles, which includes a locating system for locating objects in the area in front of the vehicle, a control device for evaluating the data of the locating system and for outputting a warning signal in the event of an imminent risk of a collision, and a detection module for detecting the course of guardrails with the aid of the data of the locating system. In the control device an additional warning function is implemented, which calculates, with the aid of the dynamic state of the vehicle and with the aid of the detected guardrail course, a parameter for the transverse dynamics of the vehicle, which is required to avert a collision with the guardrail, and which outputs a warning signal when this parameter is larger than a predefined value.

In view of the above, it is therefore an object of the present invention to provide a simple and effective way to determine that a target object is located behind a guardrail.

In accordance with the invention, a method for classifying target objects, a classification device, and a driver assistance system as recited in the independent claims are provided. Various preferred features of the invention are recited in the dependent claims.

According to one aspect, therefore, the invention provides a method for classifying target objects in a surrounding of an ego vehicle. The method comprises detecting a plurality of stationary clusters corresponding to radar reflections from support posts of a guardrail, based on radar data obtained by a radar device of the ego vehicle. The method further comprises determining a behind-the-guardrail region as a region of a detection zone of the radar device located beyond a line with respect to the ego vehicle, wherein the line extends through two outmost stationary clusters of the plurality of stationary clusters. The method further comprises classifying a target object entering the behind-the-guardrail region as being behind the guardrail.

According to another aspect, the invention provides a classification device for classifying target objects in a surrounding of an ego vehicle, comprising a stationary cluster detection unit configured to detect a plurality of stationary clusters corresponding to radar reflections from support posts of a guardrail, based on radar data obtained by a radar device of the ego vehicle. The classification device further comprises a determination unit configured to determine a behind-the-guardrail region as a region of a detection zone of the radar device located beyond a line with respect to the ego vehicle, wherein the line extends through two outmost stationary clusters of the plurality of stationary clusters. The classification device further comprises a classification unit configured to classify a target object entering the behind-the-guardrail region as being behind the guardrail.

According to another aspect, the invention provides a driver assistance system for an ego vehicle, comprising a classification device for classifying target objects in a surrounding of the ego vehicle according to the invention, and a functionality providing device for providing at least one driver assistance functionality, wherein the functionality providing device is configured to consider a target object to be irrelevant for the driver assistance functionality if the target object is classified by the classification device as being behind the guardrail.

The invention allows the detection of objects behind the guardrail in a simple and efficient way that can improve the execution time of the environment modelling algorithm, as compared, e.g., to using polynomial functions in order to determine the shape of the guardrail and to check if a detected vehicle is behind this guardrail or not. The complexity is decreased and an improvement in execution time will result.

According to the invention, a behind-the-guardrail region is determined, corresponding to a zone where the radar sensor cannot see. The behind-the-guardrail region is determined using a simple line.

According to the invention, a target object can be any other traffic participant, such as another vehicle, a cyclist, a pedestrian or the like.

According to the invention, the behind-the-guardrail region is determined as a trapezoid, wherein first and second corners of the trapezoid are defined by coordinates of the outermost stationary clusters of the plurality of stationary clusters, and wherein third and fourth corners are defined by coordinates of outermost corners of the detection zone of the radar device with respect to the ego vehicle. The trapezoid can be generated easily in a short computation time.

According to a further embodiment of the method for classifying target objects in a surrounding of the ego vehicle, the method comprises the step of determining center points of at least the two outmost stationary clusters of the plurality of stationary clusters, wherein the line extending through the two outmost stationary clusters of the plurality of stationary clusters extends through the center points of the two outmost stationary clusters of the plurality of stationary clusters. The center points may be determined as centers of mass of reflection points of the stationary clusters or by any other method.

According to a further embodiment of the method for classifying target objects in a surrounding of the ego vehicle, detecting the plurality of stationary clusters corresponding to radar reflections from support posts of the guardrail comprises determining distances between the stationary clusters, wherein a stationary cluster is associated with radar reflections from support posts of the guardrail if a distance between the stationary cluster and an adjacent stationary cluster is smaller than a predefined threshold. Therefore, only stationary clusters corresponding to a single guardrail are identified.

According to a further embodiment of the method for classifying target objects in a surrounding of the ego vehicle, the method comprises the step of detecting the target objects based on the radar data obtained by the radar device of the ego vehicle. Based on the radar data, additional information, such as velocities, an object type and the like can be generated.

According to a further embodiment of the method for classifying target objects in a surrounding of the ego vehicle, the method comprises the step of detecting the target objects based on sensor data obtained by at least one sensor device of the ego vehicle other than the radar sensor. The further sensor devices may comprise cameras, lidar sensors, infrared sensors and the like.

According to a further embodiment of the method for classifying target objects in a surrounding of the ego vehicle, each stationary cluster comprises a plurality of reflections having stationary coordinates in a global coordinate system. This ensures that the clusters are indeed stationary.

According to a further embodiment of the method for classifying target objects in a surrounding of the ego vehicle, the method comprises the step of classifying a target object leaving the behind-the-guardrail region as being not behind the guardrail. In general, any object not been located in the behind-the-guardrail region can be classified as being not behind the guardrail.

According to the invention, the determination unit is configured to determine the behind-the-guardrail region as a trapezoid, wherein first and second corners of the trapezoid are defined by coordinates of the outermost stationary clusters of the plurality of stationary clusters, and wherein third and fourth corners are defined by coordinates of outermost corners of the detection zone of the radar device with respect to the ego vehicle.

According to a further embodiment of the classification device, the determination unit is configured to determine center points of at least the two outmost stationary clusters of the plurality of stationary clusters, wherein the line extending through the two outmost stationary clusters of the plurality of stationary clusters extends through the center points of the two outmost stationary clusters of the plurality of stationary clusters.

According to a further embodiment of the classification device, the stationary cluster detection unit is configured to determine distances between the stationary clusters, and to associate a stationary cluster with radar reflections from support posts of the guardrail if a distance between the stationary cluster and an adjacent stationary cluster is smaller than a predefined threshold.

According to a further embodiment of the classification device, the classification device comprises a target object detection unit configured to detect the target objects based on the radar data obtained by the radar device of the ego vehicle.

According to a further embodiment of the driver assistance system, the functionality providing device is configured to provide at least one of a parking assistance functionality and a front traffic monitoring functionality.

For a more complete understanding of the invention and the advantages thereof, exemplary embodiments of the invention are explained in more detail in the following description with reference to the accompanying drawing figures, in which like reference characters designate like parts and in which:
- Fig. 1: shows a schematic block diagram of a driver assistance system, comprising a classification device according to an embodiment of the invention;
- Fig. 2: shows a schematic top view of an ego vehicle exiting a parking spot;
- Fig. 3: shows a schematic illustration of a behind-the-guardrail region; and
- Fig. 4: shows a flow diagram of a method for classifying target objects in a surrounding of an ego vehicle according to an embodiment of the invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a more abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as is accorded to such terms and expressions with respect to their corresponding respective areas of inquiry and study, except where specific meanings have otherwise been set forth herein.

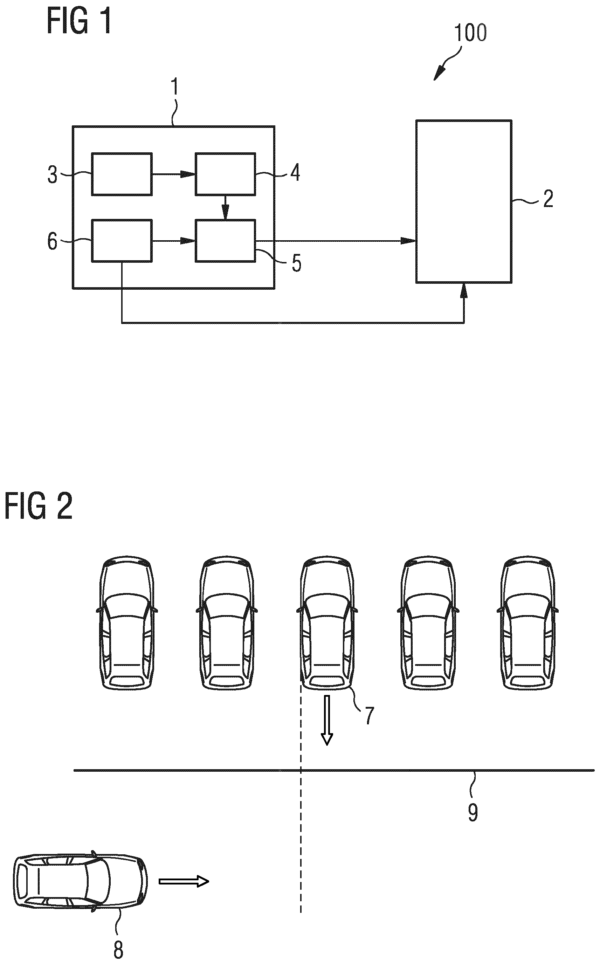

Figure 1 shows a schematic block diagram of a driver assistance system 100, comprising a classification device 1 and a functionality providing device 2.

The classification device 1 receives radar data generated by a radar device of the ego vehicle, wherein the classification device 1 and the radar device may be connected via respective interfaces, e.g., via a CAN bus or the like.

The classification device 1 analyzes the received radar data and classifies target objects in a surrounding of the ego vehicle.

The classification device 1 comprises a target object detection unit 6 which analyzes the radar data received from the radar device and detects target objects based on the radar data. According to further embodiments, the target object detection unit 6 may also receive sensor data obtained by other sensor devices of the ego vehicle 7 other than the radar data, e.g., obtained by cameras, infrared sensors, lidar sensors and the like. The sensor data obtained by the other sensor devices can be taken into account instead of or in addition to the radar sensor data to detect the target objects.

The target object detection unit 6 can determine additional properties of the target objects, such as coordinates, relative velocities, absolute velocities, accelerations, object types, object properties and the like.

The classification device 1 further comprises a stationary cluster detection unit 3 which analyzes the radar data to detect stationary clusters. Herein, the stationary cluster detection unit 3 may first determine whether coordinates associated with reflection points are stationary with respect to a global (non-moving) coordinate system, i.e., detect if the coordinates correspond to stationary objects. The stationary cluster detection unit 3 may further detect clusters of reflection points. For example, all reflection points having a distance to adjacent reflection points below a first predetermined threshold are assigned to a single cluster. Any known clustering method can be used to detect the clusters, e.g., k-means clustering, distribution-based clustering or density-based clustering.

Further, the stationary cluster detection unit 3 may compute center points of each cluster. If a distance between the center point of a given cluster and the center point of an adjacent cluster is smaller than a second predetermined threshold or within a predefined distance band, the stationary cluster detection unit 3 may associate the clusters to a group. If the stationary cluster detection unit 3 detects a plurality of clusters in a group, wherein the clusters are approximately arranged in a line and have approximately the same distance to neighboring clusters, the cluster detection unit 3 determines that the clusters correspond to radar reflections from support posts of a single guardrail.

The classification device 1 further comprises a determination unit 4 which determines a behind-the-guardrail region. The determination unit 4 determines the two outmost stationary clusters of the plurality of stationary clusters. The determination unit 4 generates a line which extends through the two outmost stationary clusters of the plurality of stationary clusters. The determination unit 4 further defines the behind-the-guardrail region as a region of a detection zone of the radar device located beyond the line with respect to the ego vehicle. The behind-the-guardrail region may comprise the entire region of the detection zone of the radar device located beyond the line with respect to the ego vehicle.

The classification device 1 further comprises a classification unit 5 which tracks whether a target object is entering or leaving the behind-the-guardrail region. If a target object is entering the behind-the-guardrail region, the object is classified as being behind the guardrail, e.g., by assigning a corresponding flag to the target object (e.g., a flag value is set to 1). If a target object is leaving the behind-the-guardrail region, the object is classified as being no longer behind the guardrail, e.g., by assigning a corresponding flag to the target object (e.g., the flag value is set to 0).

The functionality providing device 2 may comprise controlling devices and/or actuators for providing at least one driver assistance functionality. For example, the functionality providing device 2 may control driving functions, e.g., by braking, accelerating or steering the vehicle in accordance with the provided driver assistance functionality.

The functionality providing device 2 takes target objects detected by the target detection unit 6 of the classification device 1 into consideration. The functionality providing device 2 may take positions (e.g., two-dimensional or three-dimensional coordinates), velocities, accelerations and/or object types of the target object into account. For example, the functionality providing device 2 may provide a parking assistance functionality by monitoring cross traffic in front of the ego vehicle or behind the ego vehicle. The functionality providing device 2 may also provide a front traffic monitoring functionality.

The functionality providing device 2 may ignore target objects for providing the driver assistance functionality if the target object is classified by the classification device 1 as being behind the guardrail. That is, the functionality providing device 2 only takes target objects into account which are not located behind the guardrail.

All devices and units of the driver assistance system 100 mentioned above can be implemented by one or more hardware components, comprising microprocessors, microcontrollers or the like, as well as storing devices. At least some features of the devices and units of the driver assistance system 100 may be implemented in software.

Figure 2 shows a schematic top view of an ego vehicle 7 exiting a parking spot. the ego vehicle 7 comprises a driver assistance system 100 as shown in figure 1 and described above. The driver assistance system 100 provides a parking assistance functionality. The classification device 1 of the driver assistance system 100 may determine that a target object 8 which is another vehicle is entering a region behind the guardrail 9. The driver assistance system 100 may ignore the target object 8 for providing the parking assistance functionality.

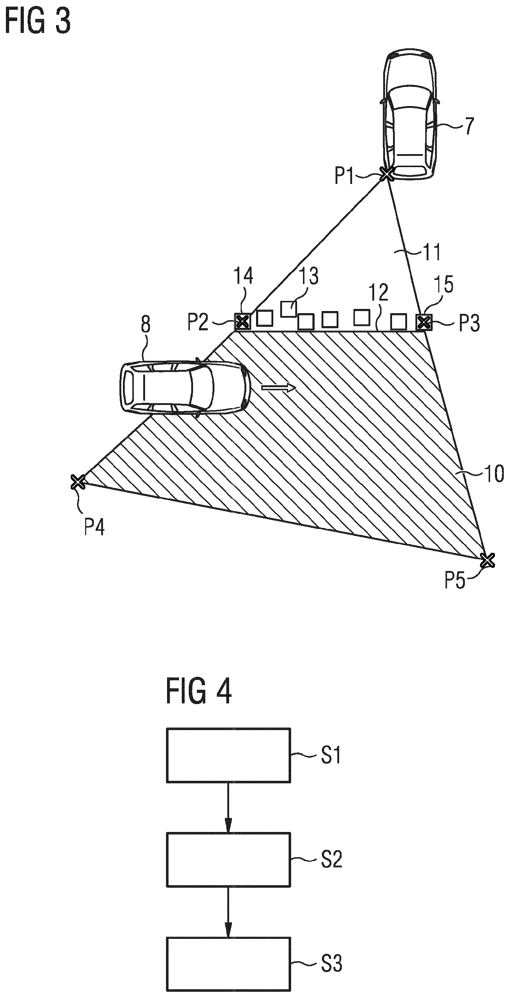

Figure 3 shows a schematic illustration of a behind-the-guardrail region 10. The stationary cluster detection unit 3 has detected a plurality of stationary clusters 13, 14, 15. The determination unit 4 may generate a line 12 extending through center points of the outermost stationary clusters 14, 15.

The determination unit 4 determines the behind-the-guardrail region to be a trapezoid, wherein first and second corners P2, P3 of the trapezoid are defined by coordinates of the outermost stationary clusters 14, 15. Third and fourth corners P4, P5 are obtained by the determination unit 4 by generating a first line and a second line, each starting from a location P1 of the radar device of the ego vehicle 7 and going through the first and second corners P2, P3. The third and fourth corners P4, P5 correspond to positions on the first line and second line, respectively, at a distance from the location P1 of the radar device of the ego vehicle 7 corresponding to the detection range of the radar device. That is, the third and fourth corners P4, P5 depend on the detection range of the radar device of the ego vehicle 7.

According to further embodiments, the behind-the-guardrail region 10 may have an arc-shaped portion extending between third and fourth corners P4, P5 as an outer boundary, corresponding to the detection range of the radar device in the outer region of the detection zone 11 of the radar device.

According to further embodiments, the behind-the-guardrail region 10 may be a smaller region starting at the line 12 but not extending all the way to the end region of the detection zone 11 of the radar device.

Figure 4 shows a flow diagram of a method for classifying target objects in a surrounding of an ego vehicle 7. The method may be computer implemented or may be computer implemented at least in part.

The method comprises a step S1 of detecting a plurality of stationary clusters 13, 14, 15 corresponding to radar reflections from support posts of a guardrail 9, based on radar data obtained by a radar device of the ego vehicle 7. Herein, stationary clusters may be assigned to a single guardrail 9, if the distance between neighboring clusters is smaller than a predefined threshold.

The method further comprises the step S2 of determining a behind-the-guardrail region 10 as a region of a detection zone 11 of the radar device located beyond a line 12 with respect to the ego vehicle, wherein the line 12 extends through two outmost stationary clusters 14, 15 of the plurality of stationary clusters. The behind-the-guardrail region 10 may be determined as a trapezoid, as explained with reference to figure 3 above.

Herein, the line 12 extending through the two outmost stationary clusters may be generated by generating a line 12 through center points of the outmost stationary clusters 14, 15.

The method further comprises the step S3 of classifying a target object entering the behind-the-guardrail region as being behind the guardrail. Herein, the target object may be determined based on the radar data and/or additional sensor data obtained by other sensor devices of the ego vehicle 7. Further, a target object leaving the behind-the-guardrail region may be classified as being not (or no longer) behind the guardrail 9. In general, any target object being located outside the behind-the-guardrail region may be classified as being not behind the guardrail 9.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise.

Moreover, the terms "first", "second", "third", etc. are used merely as labels, and are not intended to impose numerical requirements on or to establish a certain ranking of importance of their objects.

### Reference Signs

- 1: classification device
- 2: functionality providing device
- 3: cluster detection unit
- 4: determination unit
- 5: classification unit
- 6: target detection unit
- 7: ego vehicle
- 8: target object
- 9: guardrail
- 10: behind-the-guardrail region
- 100: driver assistance system
- 11: detection zone
- 12: line
- 13-15: stationary clusters
- P1: location of a radar device
- P2-P5: first to fourth corners
- S1-S3: method steps

## Claims

1. A method for classifying target objects (8) in a surrounding of an ego vehicle (7), comprising the steps:
detecting (S1) a plurality of stationary clusters (13-15) corresponding to radar reflections from support posts of a guardrail (9), based on radar data obtained by a radar device of the ego vehicle (7);
determining (S2) a behind-the-guardrail region (10) as a region of a detection zone (11) of the radar device located beyond a line (12) with respect to the ego vehicle (7); and
classifying (S3) a target object (8) entering the behind-the-guardrail region (10) as being behind the guardrail (9);
**characterized in that**
the line (12) extends through two outmost stationary clusters (14, 15) of the plurality of stationary clusters (13-15), wherein the behind-the-guardrail region (10) is determined as a trapezoid, wherein first and second corners (P2, P3) of the trapezoid are defined by coordinates of the outermost stationary clusters (14, 15) of the plurality of stationary clusters (13-15), and wherein third and fourth corners (P4, P5) are defined by coordinates of outermost corners of the detection zone (11) of the radar device with respect to the ego vehicle (7); and
the target object (8) is irrelevant for a parking assistance functionality if the target object (8) is classified as being behind the guardrail (9).

2. The method according to claim 1, further comprising determining center points of at least the two outmost stationary clusters (13-15) of the plurality of stationary clusters (13-15), wherein the line (12) extending through the two outmost stationary clusters (14, 15) of the plurality of stationary clusters (13-15) extends through the center points of the two outmost stationary clusters (14, 15) of the plurality of stationary clusters (13-15).

3. The method according to any of the preceding claims, wherein detecting the plurality of stationary clusters (13-15) corresponding to radar reflections from support posts of the guardrail (9) comprises determining distances between the stationary clusters (13-15), and wherein a stationary cluster (13-15) is associated with radar reflections from support posts of the guardrail (9) if a distance between the stationary cluster (13-15) and an adjacent stationary cluster (13-15) is smaller than a predefined threshold.

4. The method according to any of the preceding claims, further comprising the step of detecting the target objects (8) based on the radar data obtained by the radar device of the ego vehicle (7).

5. The method according to any of the preceding claims, further comprising the step of detecting the target objects (8) based on sensor data obtained by at least one sensor device of the ego vehicle (7) other than the radar sensor.

6. The method according to any of the preceding claims, wherein each stationary cluster (13-15) comprises a plurality of reflections having stationary coordinates in a global coordinate system.

7. The method according to any of the preceding claims, further comprising the step of classifying a target object (8) leaving the behind-the-guardrail region (10) as being not behind the guardrail (9).

8. A classification device (1) for classifying target objects (8) in a surrounding of an ego vehicle (7), comprising:
a stationary cluster detection unit (3) configured to detect a plurality of stationary clusters (13-15) corresponding to radar reflections from support posts of a guardrail (9), based on radar data obtained by a radar device of the ego vehicle (7),
a determination unit (4) configured to determine a behind-the-guardrail region (10) as a region of a detection zone (11) of the radar device located beyond a line (12) with respect to the ego vehicle (7), wherein the line (12) extends through two outmost stationary clusters (14, 15) of the plurality of stationary clusters (13-15), wherein the determination unit (4) is configured to determine the behind-the-guardrail region (10) as a trapezoid, wherein first and second corners (P2, P3) of the trapezoid are defined by coordinates of the outermost stationary clusters (13-15) of the plurality of stationary clusters (13-15), and wherein third and fourth corners (P4, P5) are defined by coordinates of outermost corners of the detection zone (11) of the radar device with respect to the ego vehicle (7); and
a classification unit (5) configured to classify a target object (8) entering the behind-the-guardrail region (10) as being behind the guardrail (9), wherein the target object (8) is irrelevant for a parking assistance functionality if the target object (8) is classified by classification unit (5) as being behind the guardrail (9)..

9. The classification device (1) according to claim 8, wherein the determination unit (4) is configured to determine center points of at least the two outmost stationary clusters (13-15) of the plurality of stationary clusters (13-15), wherein the line (12) extending through the two outmost stationary clusters (13-15) of the plurality of stationary clusters (13-15) extends through the center points of the two outmost stationary clusters (13-15) of the plurality of stationary clusters (13-15).

10. The classification device (1) according to any of claims 8 or 9, wherein the stationary cluster detection unit (3) is configured to determine distances between the stationary clusters (13-15), and to associate a stationary cluster (13-15) with radar reflections from support posts of the guardrail (9) if a distance between the stationary cluster (13-15) and an adjacent stationary cluster (13-15) is smaller than a predefined threshold.

11. The classification device (1) according to any of claims 8 to 10, further comprising a target object detection unit (6) configured to detect the target objects (8) based on the radar data obtained by the radar device of the ego vehicle (7).

12. A driver assistance system (100) for an ego vehicle (7), comprising:
a classification device (1) for classifying target objects (8) in a surrounding of the ego vehicle (7) according to any of claims 8 to 11; and
a functionality providing device (2) for providing at least one driver assistance functionality, whereby the driver assistance system (100) provides a parking assistance functionality, wherein the functionality providing device (2) is configured to consider a target object (8) to be irrelevant for the parking assistance functionality if the target object (8) is classified by the classification device (1) as being behind the guardrail (9).

13. The driver assistance system (100) according to claim 12, wherein the functionality providing device (2) is configured to provide a front traffic monitoring functionality.

## Patentansprüche

1. Verfahren zum Klassifizieren von Zielobjekten (8) in einer Umgebung eines Ego-Fahrzeugs (7), umfassend die Schritte:
Erfassen (S1) einer Vielzahl von stationären Clustern (13-15), die Radarreflexionen von Stützpfosten einer Leitplanke (9) entsprechen, basierend auf Radardaten, die durch eine Radarvorrichtung des Ego-Fahrzeugs (7) erhalten werden;
Bestimmen (S2) eines hinter der Leitplanke liegenden Bereichs (10) als ein Bereich einer Erfassungszone (11) der Radarvorrichtung, der jenseits einer Linie (12) in Bezug auf das Ego-Fahrzeug (7) angeordnet ist; und
Klassifizieren (S3) eines Zielobjekts (8), das in den hinter der Leitplanke liegenden Bereich (10) eintritt, als hinter der Leitplanke (9) befindlich;
**dadurch gekennzeichnet, dass**
die Linie (12) sich durch zwei äußerste stationäre Cluster (14, 15) der Vielzahl von stationären Clustern (13-15) erstreckt, wobei der hinter der Leitplanke liegende Bereich (10) als ein Trapez bestimmt ist, wobei eine erste und eine zweite Ecke (P2, P3) des Trapezes durch Koordinaten der äußersten stationären Cluster (14, 15) der Vielzahl von stationären Clustern (13-15) definiert sind, und wobei eine dritte und eine vierte Ecke (P4, P5) durch Koordinaten von äußersten Ecken der Erfassungszone (11) der Radarvorrichtung in Bezug auf das Ego-Fahrzeug (7) definiert sind; und
das Zielobjekt (8) für eine Parkassistenzfunktionalität belanglos ist, wenn das Zielobjekt (8) als hinter der Leitplanke (9) befindlich klassifiziert wird.

2. Verfahren nach Anspruch 1, ferner umfassend Bestimmen von Mittelpunkten von mindestens den zwei äußersten stationären Clustern (13-15) der Vielzahl von stationären Clustern (13-15), wobei die Linie (12), die sich durch die zwei äußersten stationären Cluster (14, 15) der Vielzahl von stationären Clustern (13-15) erstreckt, sich durch die Mittelpunkte der zwei äußersten stationären Cluster (14, 15) der Vielzahl von stationären Clustern (13-15) erstreckt.

3. Verfahren nach einem der vorhergehenden Ansprüche, wobei das Erfassen der Vielzahl von stationären Clustern (13-15), die Radarreflexionen von Stützpfosten der Leitplanke (9) entsprechen, Bestimmen von Abständen zwischen den stationären Clustern (13-15) umfasst, und wobei ein stationärer Cluster (13-15) mit Radarreflexionen von Stützpfosten der Leitplanke (9) assoziiert wird, wenn ein Abstand zwischen dem stationären Cluster (13-15) und einem benachbarten stationären Cluster (13-15) kleiner als ein vordefinierter Schwellenwert ist.

4. Verfahren nach einem der vorhergehenden Ansprüche, ferner umfassend den Schritt eines Erfassens der Zielobjekte (8) basierend auf den Radardaten, die durch die Radarvorrichtung des Ego-Fahrzeugs (7) erhalten werden.

5. Verfahren nach einem der vorhergehenden Ansprüche, ferner umfassend den Schritt eines Erfassens der Zielobjekte (8) basierend auf Sensordaten, die durch mindestens eine Sensorvorrichtung des Ego-Fahrzeugs (7), die sich von dem Radarsensor unterscheidet, erhalten werden.

6. Verfahren nach einem der vorhergehenden Ansprüche, wobei jeder stationäre Cluster (13-15) eine Vielzahl von Reflexionen, die stationäre Koordinaten in einem globalen Koordinatensystem aufweisen, umfasst.

7. Verfahren nach einem der vorhergehenden Ansprüche, ferner umfassend den Schritt eines Klassifizierens eines Zielobjekts (8), das den hinter der Leitplanke liegenden Bereich (10) verlässt, als nicht hinter der Leitplanke (9) befindlich.

8. Klassifizierungsvorrichtung (1) zum Klassifizieren von Zielobjekten (8) in einer Umgebung eines Ego-Fahrzeugs (7), umfassend:
eine Erfassungseinheit (3) für stationäre Cluster, die dazu konfiguriert ist, eine Vielzahl von stationären Clustern (13-15), die Radarreflexionen von Stützpfosten einer Leitplanke (9) entsprechen, basierend auf Radardaten, die durch eine Radarvorrichtung des Ego-Fahrzeugs (7) erhalten werden, zu erfassen;
eine Bestimmungseinheit (4), die dazu konfiguriert ist, einen hinter der Leitplanke liegenden Bereich (10) als einen Bereich einer Erfassungszone (11) der Radarvorrichtung zu bestimmen, der sich in Bezug auf das Ego-Fahrzeug (7) jenseits einer Linie (12) befindet, wobei sich die Linie (12) durch zwei äußerste stationäre Cluster (14, 15) der Vielzahl von stationären Clustern (13-15) erstreckt, wobei die Bestimmungseinheit (4) dazu konfiguriert ist, den hinter der Leitplanke liegenden Bereich (10) als ein Trapez zu bestimmen, wobei eine erste und eine zweite Ecke (P2, P3) des Trapezes durch Koordinaten der äußersten stationären Cluster (13-15) der Vielzahl von stationären Clustern (13-15) definiert sind, und wobei eine dritte und eine vierte Ecke (P4, P5) durch Koordinaten von äußersten Ecken der Erfassungszone (11) der Radarvorrichtung in Bezug auf das Ego-Fahrzeug (7) definiert sind; und
eine Klassifizierungseinheit (5), die dazu konfiguriert ist, ein Zielobjekt (8), das in den hinter der Leitplanke liegenden Bereich (10) eintritt, als hinter der Leitplanke (9) befindlich zu klassifizieren, wobei das Zielobjekt (8) für eine Parkassistenzfunktionalität belanglos ist, wenn das Zielobjekt (8) durch die Klassifizierungseinheit (5) als hinter der Leitplanke (9) befindlich klassifiziert wird.

9. Klassifizierungsvorrichtung (1) nach Anspruch 8, wobei die Bestimmungseinheit (4) dazu konfiguriert ist, Mittelpunkte von mindestens den zwei äußersten stationären Clustern (13-15) der Vielzahl von stationären Clustern (13-15) zu bestimmen, wobei die Linie (12), die sich durch die zwei äußersten stationären Cluster (13-15) der Vielzahl von stationären Clustern (13-15) erstreckt, sich durch die Mittelpunkte der zwei äußersten stationären Cluster (13-15) der Vielzahl von stationären Clustern (13-15) erstreckt.

10. Klassifizierungsvorrichtung (1) nach einem der Ansprüche 8 oder 9, wobei die Erfassungseinheit (3) für stationäre Cluster dazu konfiguriert ist, Abstände zwischen den stationären Clustern (13-15) zu bestimmen und einen stationären Cluster (13-15) mit Radarreflexionen von Stützpfosten der Leitplanke (9) zu assoziieren, wenn ein Abstand zwischen dem stationären Cluster (13-15) und einem benachbarten stationären Cluster (13-15) kleiner als ein vordefinierter Schwellenwert ist.

11. Klassifizierungsvorrichtung (1) nach einem der Ansprüche 8 bis 10, ferner umfassend eine Zielobjekterfassungseinheit (6), die dazu konfiguriert ist, die Zielobjekte (8) basierend auf den durch die Radarvorrichtung des Ego-Fahrzeugs (7) erhaltenen Radardaten zu erfassen.

12. Fahrerassistenzsystem (100) für ein Ego-Fahrzeug (7), umfassend:
eine Klassifizierungsvorrichtung (1) zum Klassifizieren von Zielobjekten (8) in einer Umgebung des Ego-Fahrzeugs (7) nach einem der Ansprüche 8 bis 11; und
eine funktionalitätsbereitstellende Vorrichtung (2) zum Bereitstellen mindestens einer Fahrerassistenzfunktionalität, wobei das Fahrerassistenzsystem (100) eine Parkassistenzfunktionalität bereitstellt, wobei die funktionalitätsbereitstellende Vorrichtung (2) dazu konfiguriert ist, ein Zielobjekt (8) als belanglos für die Parkassistenzfunktionalität zu betrachten, wenn das Zielobjekt (8) durch die Klassifizierungsvorrichtung (1) als hinter der Leitplanke (9) befindlich klassifiziert wird.

13. Fahrerassistenzsystem (100) nach Anspruch 12, wobei die funktionalitätsbereitstellende Vorrichtung (2) dazu konfiguriert ist, eine Frontverkehrsüberwachungsfunktionalität bereitzustellen.

## Revendications

1. Procédé de classification d'objets cibles (8) dans l'environnement d'un véhicule égo (7), comprenant les étapes suivantes :
la détection (S1) d'une pluralité de groupes stationnaires (13 à 15) correspondant aux réflexions radar des poteaux de support d'un garde-fou (9), sur la base de données radar obtenues par un dispositif radar du véhicule égo (7) ;
la détermination (S2) d'une région située derrière le garde-fou (10) comme une région d'une zone de détection (11) du dispositif radar situé au-delà d'une ligne (12) par rapport au véhicule égo (7) ; et
la classification (S3) d'un objet cible (8) entrant dans la région située derrière le garde-fou (10) comme étant derrière le garde-fou (9) ;
**caractérisé en ce que**
la ligne (12) s'étend à travers deux groupes stationnaires les plus extérieurs (14, 15) de la pluralité de groupes stationnaires (13 à 15), dans lequel la région située derrière le garde-fou (10) est définie comme un trapèze, dans lequel des premier et deuxième coins (P2, P3) du trapèze sont définis par des coordonnées des groupes stationnaires les plus extérieurs (14, 15) de la pluralité de groupes stationnaires (13 à 15), et dans lequel des troisième et quatrième coins (P4, P5) sont définis par des coordonnées des coins les plus extérieurs de la zone de détection (11) du dispositif radar par rapport au véhicule égo (7) ; et
l'objet cible (8) est sans importance pour une fonctionnalité d'assistance au stationnement si l'objet cible (8) est classé comme étant derrière le garde-fou (9).

2. Procédé selon la revendication 1, comprenant en outre la détermination de points centraux d'au moins les deux groupes stationnaires les plus extérieurs (13 à 15) de la pluralité de groupes stationnaires (13 à 15), dans lequel la ligne (12) s'étendant à travers les deux groupes stationnaires les plus extérieurs (14, 15) de la pluralité de groupes stationnaires (13 à 15) s'étend à travers les points centraux des deux groupes stationnaires les plus extérieurs (14, 15) de la pluralité de groupes stationnaires (13 à 15).

3. Procédé selon l'une quelconque des revendications précédentes, dans lequel la détection de la pluralité de groupes stationnaires (13 à 15) correspondant aux réflexions radar des poteaux de support du garde-fou (9) comprend la détermination de distances entre les groupes stationnaires (13 à 15), et dans lequel un groupe stationnaire (13 à 15) est associé aux réflexions radar des poteaux de support du garde-fou (9) si la distance entre le groupe stationnaire (13 à 15) et un groupe stationnaire adjacent (13 à 15) est inférieure à un seuil prédéfini.

4. Procédé selon l'une quelconque des revendications précédentes, comprenant en outre l'étape de détection des objets cibles (8) sur la base des données radar obtenues par le dispositif radar du véhicule égo (7).

5. Procédé selon l'une quelconque des revendications précédentes, comprenant en outre l'étape de détection des objets cibles (8) sur la base de données de capteur obtenues par au moins un dispositif de capteur du véhicule égo (7) autre que le capteur radar.

6. Procédé selon l'une quelconque des revendications précédentes, dans lequel chaque groupe stationnaire (13 à 15) comprend une pluralité de réflexions ayant des coordonnées stationnaires dans un système de coordonnées global.

7. Procédé selon l'une quelconque des revendications précédentes, comprenant en outre l'étape de classification d'un objet cible (8) quittant la région située derrière le garde-fou (10) comme n'étant pas derrière le garde-fou (9).

8. Dispositif de classification (1) pour classer des objets cibles (8) dans l'environnement d'un véhicule égo (7), comprenant :
une unité de détection de groupe stationnaire (3) configurée pour détecter une pluralité de groupes stationnaires (13 à 15) correspondant aux réflexions radar des poteaux de support d'un garde-fou (9), sur la base de données radar obtenues par un dispositif radar du véhicule égo (7) ;
une unité de détermination (4) configurée pour déterminer une région située derrière le garde-fou (10) comme une région d'une zone de détection (11) du dispositif radar situé au-delà d'une ligne (12) par rapport au véhicule égo (7), dans lequel la ligne (12) s'étend à travers deux groupes stationnaires les plus extérieurs (14, 15) de la pluralité de groupes stationnaires (13 à 15),
dans lequel l'unité de détermination (4) est configurée pour déterminer la région située derrière le garde-fou (10) comme un trapèze, dans lequel des premier et deuxième coins (P2, P3) du trapèze sont définis par des coordonnées des groupes stationnaires les plus extérieurs (13 à 15) de la pluralité de groupes stationnaires (13 à 15), et dans lequel des troisième et quatrième coins (P4, P5) sont définis par des coordonnées des coins les plus extérieurs de la zone de détection (11) du dispositif radar par rapport au véhicule égo (7) ; et
une unité de classification (5) configurée pour classer un objet cible (8) entrant dans la région située derrière le garde-fou (10) comme étant derrière le garde-fou (9), dans lequel l'objet cible (8) est sans importance pour une fonctionnalité d'assistance au stationnement si l'objet cible (8) est classé par l'unité de classification (5) comme étant derrière le garde-fou (9).

9. Dispositif de classification (1) selon la revendication 8, dans lequel l'unité de détermination (4) est configurée pour déterminer des points centraux d'au moins les deux groupes stationnaires les plus extérieurs (13 à 15) de la pluralité de groupes stationnaires (13 à 15), dans lequel la ligne (12) s'étendant à travers les deux groupes stationnaires les plus extérieurs (13 à 15) de la pluralité de groupes stationnaires (13 à 15) s'étend à travers les points centraux des deux groupes stationnaires les plus extérieurs (13 à 15) de la pluralité de groupes stationnaires (13 à 15).

10. Dispositif de classification (1) selon l'une quelconque des revendications 8 ou 9, dans lequel l'unité de détection de groupe stationnaire (3) est configurée pour déterminer des distances entre les groupes stationnaires (13 à 15), et pour associer un groupe stationnaire (13 à 15) aux réflexions radar des poteaux de support du garde-fou (9) si la distance entre le groupe stationnaire (13 à 15) et un groupe stationnaire adjacent (13 à 15) est inférieure à un seuil prédéfini.

11. Dispositif de classification (1) selon l'une quelconque des revendications 8 à 10, comprenant en outre une unité de détection d'objet cible (6) configurée pour détecter les objets cibles (8) sur la base des données radar obtenues par le dispositif radar du véhicule égo (7).

12. Système d'assistance au conducteur (100) pour un véhicule ego (7), comprenant :
un dispositif de classification (1) pour classer des objets cibles (8) dans l'environnement du véhicule égo (7) selon l'une quelconque des revendications 8 à 11 ; et
un dispositif de fourniture de fonctionnalités (2) pour fournir au moins une fonctionnalité d'assistance au conducteur, moyennant quoi le système d'assistance au conducteur (100) fournit une fonctionnalité d'assistance au stationnement, dans lequel le dispositif de fourniture de fonctionnalités (2) est configuré pour considérer un objet cible (8) comme sans importance pour la fonctionnalité d'assistance au stationnement si l'objet cible (8) est classé par le dispositif de classification (1) comme étant derrière le garde-fou (9).

13. Système d'assistance au conducteur (100) selon la revendication 12, dans lequel le dispositif de fourniture de fonctionnalités (2) est configuré pour fournir une fonctionnalité de surveillance du trafic avant.
